# EUROPÄISCHE PATENTSCHRIFT

(11) **EP 1 621 406 B1**
(45) Veröffentlichungstag und Bekanntmachung des Hinweises auf die Patenterteilung: **07.03.2007**
(21) Anmeldenummer: 05015595.1
(22) Anmeldetag: 19.07.2005
(51) Int. Cl.: B60R 5/04

(54) **Kassettengehäuse mit einem längserstreckten Profil**
Housing with a longitudinal profil
Boîtier de cassette avec profil longitudinal

(30) Priorität: 29.07.2004 DE 102004038077
(43) Veröffentlichungstag der Anmeldung: 01.02.2006
(73) Patentinhaber: BOS GmbH & Co. KG, 73760 Ostfildern (DE)
(72) Erfinder: Walter, Herbert, 73061 Ebersbach (DE)
(74) Vertreter: Patentanwälte Ruff, Wilhelm, Beier, Dauster & Partner

(56) Entgegenhaltungen:
- DE-A1- 10 212 336
- US-B1- 6 213 186

## Beschreibung

Die Erfindung betrifft eine Kassettengehäuse mit einem längserstreckten Profil für die Aufnahme von wenigstens einer Wickelwelle, auf der jeweils ein flexibles Flächengebilde auf- und abwickelbar gehalten ist.

Eine solche Einrichtung ist schon bekannt aus der US 6 213 186.

Derartige Kassettengehäuse sind für Laderaumschutzvorrichtungen von Kombi-Personenkraftwagen allgemein bekannt. Das Kassettengehäuse weist als längserstrecktes Profil ein formsteifes Hohlprofil auf, das üblicherweise als Metallstrangpressprofil gestaltet ist. Die gegenüberliegenden Stirnseiten des Hohlprofiles sind durch Seitenteile verschlossen, die mit Lagerungen für zwei Wickelwellen versehen sind. Die eine Wickelwelle trägt ein flexibles Trennnetz, das aus dem Kassettengehäuse etwa vertikal nach oben ausziehbar ist. Die andere Wickelwelle trägt eine Laderaumabdeckung, die als flexible Abdeckplane gestaltet ist. Die Abdeckplane ist durch einen weiteren Längsschlitz etwa horizontal aus dem Kassettengehäuse ausziehbar. Das Kassettengehäuse wird mittels entsprechender Befestigungselemente in fahrzeugfesten Halterungen lösbar befestigt. In seinem Funktionszustand ist das Kassettengehäuse im Fahrzeug montiert und das Trennnetz nach oben ausgezogen und in dachseitigen Halterungen eingehängt. Falls bei einer starken Fahrzeugverzögerung durch eine Vollbremsung, einen Fahrzeugaufprall oder ähnliches Ladegut aus dem Laderaum nach vorne geschleudert wird, taucht das Ladegut in das Trennnetz ein, wodurch nicht nur das Trennnetz, sondern auch das Kassettengehäuse starken Belastungen ausgesetzt werden. Um diese Belastungen aufnehmen zu können, ist das Kassettengehäuse und insbesondere das Hohlprofil äußerst stabil gestaltet. Das Kassettengehäuse weist demzufolge ein hohes Gewicht auf.

Aufgabe der Erfindung ist es, ein Kassettengehäuse der eingangs genannten Art zu schaffen, das ein reduziertes Gewicht bei dennoch ausreichender Stabilität aufweist.

Diese Aufgabe wird dadurch gelöst, dass ein lasttragendes Längsprofil vorgesehen ist, das sich zumindest weitgehend über die Länge des Kassettengehäuses erstreckt, und an dem das Profil befestigt ist. Die wesentliche Lastaufnahmefunktion des Kassettengehäuses wird bei der erfindungsgemäßen Lösung durch das lasttragende Längsprofil übernommen. Das Profil kann mit einem oder mehreren offenen Hohlräumen in Schalenform gestaltet sein, das durch die Verbindung mit dem Längsprofil entsprechend geschlossene Hohlräume bildet. Hier spricht man von einem Schalenprofil. Alternativ kann das Profil auch mit wenigstens einem geschlossenen Hohlraum versehen sein. Hier wird dann von einem geschlossenen Hohlprofil gesprochen. Da die lastaufnehmende Funktion von dem Längsprofil übernommen wird, kann das Profil selbst eine wesentlich reduzierte Stabilität aufweisen und dadurch eine erhebliche Gewichtsreduzierung für das Kassettengehäuse bewirken. Vorzugsweise ist das lasttragende Längsprofil aus Metall, insbesondere einem Leichtmetall, hergestellt.

Die erfindungsgemäße Lösung eignet sich insbesondere für Kassettengehäuse, die Teil von Schutzvorrichtungen im Innenraum eines Kraftfahrzeuges sind. Derartige Schutzvorrichtungen sind zum einen etwa vertikal ausziehbare Trenngebilde und zum anderen etwa horizontal ausziehbare Laderaumabdeckungen. In gleicher Weise ist das Kassettengehäuse auch für Sonnenschutzvorrichtungen einsetzbar, die ein rolloförmig ausziehbares Sonnenschutzgebilde aufweisen. In bevorzugter Weise ist das Längsprofil mit einer energieabsorbierend deformierbaren Struktur versehen. Eine derartige Struktur kann insbesondere dadurch geschaffen werden, dass das lastaufnehmende Längsprofil zumindest abschnittsweise unter Energieaufnahme plastisch deformierbar ist. Dadurch, dass die nichttragenden Teile des Kassettengehäuses wie das schalenartige oder geschlossene Profil und die Seitenteile aus Kunststoff hergestellt werden können, können diese in designerischer Hinsicht weitgehend frei gestaltet werden. Dies schafft die Möglichkeit, eine gute Anpassung an eine Fahrzeuginnenraumgestaltung zu erzielen. Vorzugsweise werden für das lastaufnehmende Längsprofil hochfeste Materialien eingesetzt, die gegebenenfalls mit partiellen Materialreduzierungen, insbesondere durch eine Lochstruktur kombiniert sein können. Die erfindungsgemäße Lösung eignet sich besonders vorteilhaft für Personenkraftwagen, die in einem Fahrzuginnenraum sowohl einen Fahrgastraum als auch einen zum Fahrgastraum offenen Laderaum aufweisen. Das Kassettengehäuse ist dann Teil einer Schutzvorrichtung, die dem Laderaum zugeordnet ist und insbesondere im Bereich einer Fondsitzbank fahrzeugfest lösbar positioniert ist. Die Schutzvorrichtung dient mittels eines Flächengebildes vorzugsweise zum Abtrennen des Laderaumes vom Fahrgastraum und mittels eines weiteren Flächengebildes zum etwa horizontalen Abdecken eines Laderaumes.

In Ausgestaltung der Erfindung ist das lasttragende Längsprofil mit einer Lochstruktur versehen. Dadurch wird eine weitere Gewichtsreduzierung erzielt. Die Lochstruktur ist derart ausgeführt, dass die maßgeblichen Festigkeitskriterien des Längsprofiles nicht beeinträchtigt werden.

In weiterer Ausgestaltung der Erfindung weist das Längsprofil einen L-förmigen Querschnitt auf. Vorzugsweise werden somit zwei L-förmig zueinander ausgerichtete Profilschenkel gebildet, von denen einer eine Rückwand und der andere eine Unterseite des Kassettengehäuses bilden kann.

In weiterer Ausgestaltung der Erfindung ist das Längsprofil an den gegenüberliegenden Stirnenden mit Lagerböcken zur Lagerung von wenigstens einer Wickelwelle versehen. Da auch über die wenigstens eine Wickelwelle bei auftretenden Belastungen Kräfte in das Kassettengehäuse übertragen werden, gewährleistet diese Ausgestaltung die Einleitung dieser Belastungen in das Längsprofil, das für eine entsprechende Lastaufnahme geeignet ist.

In weiterer Ausgestaltung der Erfindung umfassen die Lagerböcke einstückig an dem Längsprofil angeformte Tragwinkel. An den Tragwinkeln sind entsprechende Lagerelemente für die Wickelwelle angeordnet.

In weiterer Ausgestaltung der Erfindung ist das Längsprofil als einteilige Metallblechkonstruktion ausgeführt. Dadurch ist eine kostengünstige und dennoch ausreichend stabile Lösung gewährleistet.

In weiterer Ausgestaltung der Erfindung sind zwei becherartige Seitenteile vorgesehen, die das Längsprofil und das Profil teilweise axial überdecken und sowohl mit dem Längsprofil als auch mit dem Profil verbunden sind. Die Seitenteile können insbesondere zur Lagerung der weiteren Wickelwelle für die Halterung einer etwa horizontal auf- und abwickelbaren Laderaumabdeckung vorgesehen sein, die bei starken Fahrzeugverzögerungen keine Rückhaltefunktion aufweist. Die Seitenteile dienen insbesondere dazu, das Profil mit dem Längsprofil positionsgesichert zu verbinden.

In weiterer Ausgestaltung der Erfindung sind die Seitenteile und/oder das Profil aus einem Leichtbauwerkstoff, insbesondere aus Kunststoff oder einem Verbundwerkstoff, hergestellt. Da die Seitenteile und das Profil zumindest weitgehend ohne lastaufnehmende Funktion sind, können sie in Leichtbauweise hergestellt sein, wodurch das Gesamtgewicht des Kassettengehäuses äußerst niedrig gehalten werden kann. Das niedrige Gesamtgewicht des Kassettengehäuses schafft eine ergonomisch günstigere und handlichere Bedienbarkeit des Kassettengehäuses bei der Montage oder Demontage innerhalb des Kraftfahrzeugs. Zudem wird die Möglichkeit geschaffen, die Seitenteile und das Profil zumindest weitgehend nach designerischen Gestaltungskriterien auszuführen, so dass insbesondere eine Anpassung an eine Fahrzeuginnenraumgestaltung ermöglicht ist.

In weiterer Ausgestaltung der Erfindung weisen die Seitenteile Steckprofilierungen zum axialen Aufstecken der Seitenteile auf das Profil und das Längsprofil auf. Dadurch wird ein in Aufsteckrichtung kraftschlüssiger Rückhalt und quer zur Aufsteckrichtung ein formschlüssiger Rückhalt der Seitenteile an dem Profil und an dem Längsprofil gewährleistet.

In weiterer Ausgestaltung der Erfindung weist das Längsprofil einen profilierten Längskantenabschnitt auf, der über seine Länge flächig mit einem Profilaufnahmeabschnitt des Profiles verbunden ist. Vorzugsweise sind der profilierte Längskantenabschnitt und der Profilaufnahmeabschnitt derart aufeinander abgestimmt, dass der Längskantenabschnitt und der Profilaufnahmeabschnitt axial ineinander geschoben werden können, so dass zusätzlich zu einem Kraftschluss ein Formschluss bei der Verbindung zwischen dem Längsprofil und dem Profil gegeben ist.

Weitere Vorteile und Merkmale der Erfindung ergeben sich aus den Ansprüchen sowie aus der nachfolgenden Beschreibung eines bevorzugten Ausführungsbeispieles der Erfindung, das anhand der Zeichnungen dargestellt ist.
- Fig. 1: zeigt in perspektivischer Darstellung eine Ausführungsform eines erfindungsgemäßen Kassettengehäuses von einer üblicherweise einer Fondsitzbank zugewandten Rückseite her,
- Fig. 2: das Kassettengehäuse nach Fig. 1 in einer perspektivischen Explosionsdarstellung, und
- Fig. 3: in vergrößerter Darstellung einen Querschnitt durch das Kassettengehäuse nach Fig. 1.

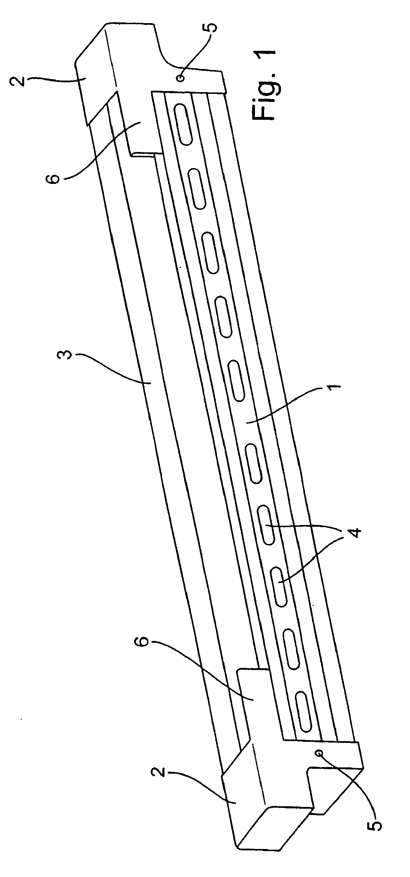

Ein Kassettengehäuse nach den Figuren 1 bis 3 ist Teil einer Schutzvorrichtung, die im Bereich eines Laderaumes eines Kraftfahrzeuges, insbesondere eines Kombi-Personenkraftwagens, einer Großraumlimousine, eines Sports Utility Vehicle oder ähnlichem angeordnet ist. Die Anordnung des Kassettengehäuses erfolgt vorzugsweise in einem vorderen Bereich des Laderaumes am Übergang zu einem Fahrgastraum, der ebenfalls Teil des Fahrzeuginnenraumes ist. Vorzugsweise ist das Kassettengehäuse in fahrzeugfesten Halterungen etwa auf Höhe einer Fahrzeugbordkante in Fahrzeugquerrichtung ausgerichtet und unmittelbar hinter einer Fondsitzbank positioniert. Das Kassettengehäuse erstreckt sich zumindest weitgehend über die gesamte Breite des Laderaumes.

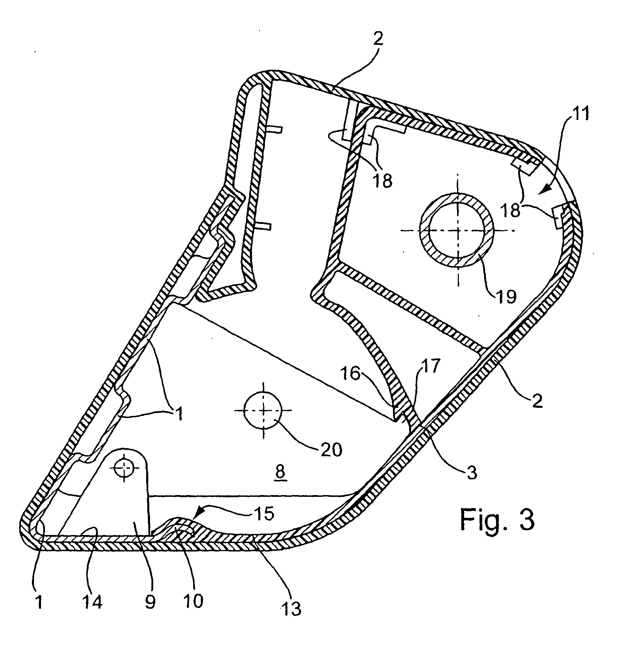

Das Kassettengehäuse wird aus mehreren Teilen gebildet, von denen lediglich ein Teil eine lastaufnehmende Funktion aufweist und mit einer entsprechenden Festigkeit versehen ist. Wie anhand der Figuren 1 bis 3 erkennbar ist, weist das Kassettengehäuse ein Längsprofil 1 auf, das aus einem hochfesten Material besteht, das energieabsorbierend deformierbar ist. Beim dargestellten Ausführungsbeispiel ist das lastaufnehmende Längsprofil 1 als einteilige Metallblechkonstruktion ausgeführt. Das Längsprofil 1 weist im wesentlichen einen etwa L-förmigen Querschnitt auf, durch den ein eine Rückwand des Kassettengehäuses bildender Profilschenkel und ein eine Unterseite bildender Profilschenkel 14 geschaffen werden. Der rückseitige Profilschenkel ist mit einer Lochstruktur versehen, die durch eine Reihe von in Längsrichtung des Längsprofiles 1 verlaufenden Langlöchern 4 gestaltet ist. Der rückseitige Profilschenkel weist zudem zwei Versteifungssicken auf, die sich parallel zu der Langlochreihe 4 oberhalb und unterhalb dieser Langlochreihe über die gesamte Länge des Längsprofils 1 erstrecken. Der unterseitige Profilschenkel 14 weist im Bereich seiner Längskante über seine gesamte Länge eine sickenartige Profilierung 10 auf, die im Querschnitt nach oben konvex gewölbt ist (Fig. 3). An gegenüberliegenden Stirnenden des unterseitigen Profilschenkels 14 sind rechtwinklig nach oben abragende Haltelaschen 9 vorgesehen, die für die Fixierung eines Funktionsteiles einer Wickelwelle dienen.

Der rückseitige Profilschenkel weist an seinen gegenüberliegenden Stirnseiten Laschenfortsätze 7 auf, die sich in Verlängerung des rückseitigen Profilschenkels in Längsrichtung des Längsprofiles 1 fortsetzen und plattenartig und eben ausgeführt sind. Unterhalb der Laschenfortsätze 7 sind im Bereich der gegenüberliegenden Stirnseiten zwei Tragwinkel 8 vorgesehen, die von dem rückseitigen Profilschenkel aus rechtwinklig zu der dem unterseitigen Profilschenkel 14 zugewandten Seite abgestellt sind. Jeder Tragwinkel 8 weist ein Lagerelement 20 (Fig. 3) auf, um zwischen den beiden Tragwinkeln eine Wickelwelle drehbar lagern zu können, die sich über die gesamte Länge des Längsprofiles 1 erstreckt. Die Wickelwelle ist in grundsätzlich bekannter und nicht näher dargestellter Weise mit einem auf- und abwickelbaren Flächengebilde in Form eines Trennnetzes versehen, das etwa vertikal nach oben ausziehbar ist, sobald das Kassettengehäuse innerhalb eines Fahrzeugs positioniert ist und in dachseitigen Halterungen lösbar befestigt werden kann. Die Wickelwelle ist mit einer Rückholfederanordnung versehen, die sich an den Haltelaschen 9 abstützt, um die Wickelwelle in Aufwickelrichtung mit Federkraft zu beaufschlagen.

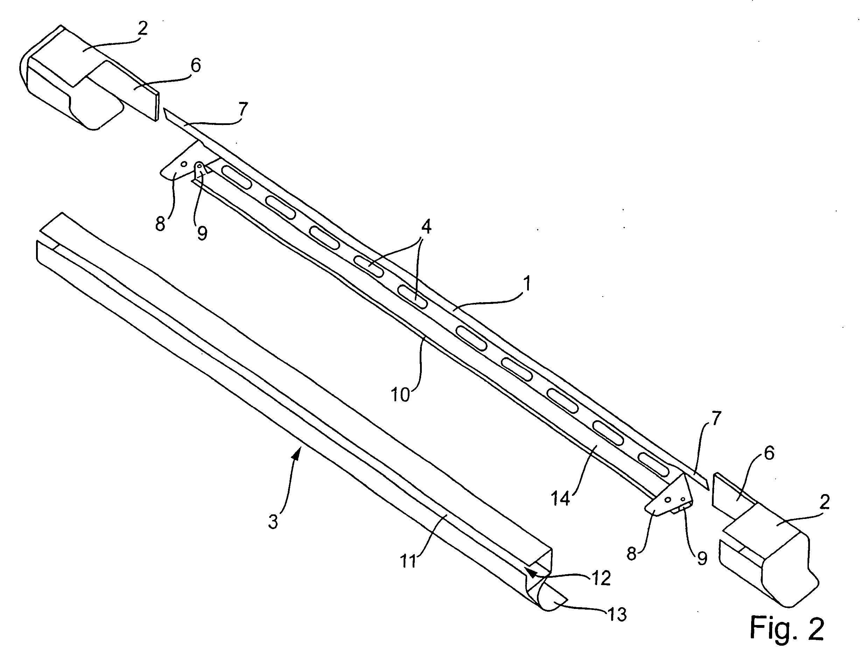

An dem lastaufnehmenden Längsprofil 1 wird ein Hohlprofil 3 befestigt, das sowohl schalenförmig als auch geschlossen hohl ausgeführt ist. Das Hohlprofil 3 weist einen oberen, im wesentlichen geschlossenen Hohlraum 12 auf, der lediglich durch einen sich über die gesamte Länge des Hohlprofiles 3 erstreckenden Längsschlitz 11 schräg nach oben und nach vorne offen ist. Ein Schalenabschnitt 13 des Hohlprofiles 3 ist unterhalb des Hohlraumes 12 angeordnet und im Querschnitt derartig zu dem Längsprofil 1 hin gewölbt, dass sich gemeinsam mit dem L-förmigen Querschnitt des Längsprofiles 1 ein weiterer Hohlraum für die Aufnahme der Wickelwelle und des darauf befestigten Flächengebildes ergibt, die zwischen den Tragwinkeln 8 gelagert ist. Zur Befestigung des Schalenabschnittes 13 an dem Längsprofil 1 weist der Schalenabschnitt 13 im Bereich seines Längsrandes eine zur Längsseite offene Aufnahmenut auf, die mit einem gewölbten Querschnitt versehen ist, der auf den Querschnitt der sickenartigen Profilierung 10 abgestimmt ist. Dadurch kann die Aufnahmenut des Längsrandes 15 des Schalenabschnittes 13 des Hohlprofiles 3 formschlüssig auf die sickenartige Profilierung 10 aufgesteckt werden. Das Aufstecken kann entweder in Längsrichtung des Längsprofiles 1 oder quer zur Längsrichtung des Längsprofiles 1 erfolgen, indem das Hohlprofil 3 gemäß Fig. 2 über seine gesamte Länge vor dem Längsprofil 1 positioniert und durch gleichzeitiges Verschwenken über seine gesamte Breite gleichzeitig auf die sickenförmige Profilierung 10 aufgesteckt wird.

Um das Hohlprofil 3 an dem Längsprofil 1 fixieren zu können, ist zusätzlich zu der Steckverbindung zwischen der sickenförmigen Profilierung 10 und dem Längsrand 15 und der dazugehörigen Aufnahmenut eine Rastverbindung vorgesehen, die im Bereich der Tragwinkel 8 positioniert ist. Hierzu weisen die beiden Tragwinkel 8 an ihrem vorderen und oberen Endbereich eine Rastnase 17 auf, die nach oben abragt. Das Hohlprofil 2 ist mit einem korrespondierenden Raststeg 16 versehen, der im montierten Zustand über den Rastnasen 17 einrastet, wie anhand der Fig. 3 erkennbar ist. Hierdurch wird eine vorläufige Fixierung des Hohlprofiles 3 an dem Längsprofil 1 erzielt. Die endgültige Fixierung erfolgt durch zwei becherartige Seitenteile 2, die von gegenüberliegenden Stirnseiten auf die vormontierte Einheit von Längsprofil 1 und Hohlprofil 3 axial aufgeschoben werden (Figuren 1 und 2).

Das Hohlprofil 3 besteht beim dargestellten Ausführungsbeispiel aus Kunststoff. Auch die beiden becherartigen Seitenteile 2 sind aus Kunststoff hergestellt und übergreifen jeweils das Längsprofil 1 und das Hohlprofil 3 über eine bestimmte axiale Länge außen. Jedes Seitenteil 2 ist mit einem nicht näher bezeichneten Längsschlitzfortsatz versehen, der fluchtend zu dem Längsschlitz 11 des Hohlprofiles 3 angeordnet ist. Beide Seitenteile 2 weisen jeweils einen Stützfortsatz 6 auf, der parallel zu einer Längsachse des Kassettengehäuses zur Mitte des Kassettengehäuses hin abragt. Jedes Seitenteil 2 ist axial auf das Längsprofil 1 und das Hohlprofil 3 aufgesteckt. Um eine gegenseitige formschlüssige Fixierung des jeweiligen Seitenteiles 2, des zugehörigen Endbereiches des Hohlprofiles 3 und des Fortsatzes 7 des Längsprofiles 1 zu erzielen, ist die Innenkontur jedes Seitenteiles 2 auf die Außenkonturen von Hohlprofil 3 und Längsprofil 1 abgestimmt. Innenseitig ist jedes Seitenteil 2 mit Steckprofilierungen 18 in Form von Führungsstegen und Führungswinkeln versehen, die eine bündige und spielfreie Aufnahme des Hohlprofiles 3 in dem Seitenteil 2 ermöglichen. Jedes Seitenteil 2 ist zudem mittels wenigstens eines Befestigungselementes 5 an dem Längsprofil 1 befestigt, indem das Befestigungselement eine axiale Sicherung des jeweiligen Seitenteiles 2 relativ zu dem Längsprofil 1 bewirkt. Als Befestigungselemente 5 können Nieten, Schrauben oder ähnliche Befestigungsmittel vorgesehen sein.

Eine innenseitige Stirnfläche jedes Seitenteiles 2 ist mit einem bolzenartigen Lagerelement 19 zur Lagerung eine weiteren Wickelwelle versehen, auf der in nicht näher dargestellter Weise eine flexible Laderaumabdeckung gehalten ist.

Entweder an den Seitenteilen 2 oder direkt an dem Längsprofil 1 sind zudem in nicht näher dargestellter Weise Teile einer Haltevorrichtung zur fahrzeugseitigen Befestigung des Kassettengehäuses angebracht. Die korrespondierenden, fahrzeugfesten Teile der Haltevorrichtung sind entweder im Bereich einer Rückseite einer Rückenlehne der Fondsitzbank, oder etwa auf Höhe einer Fahrzeugbordkante an Fahrzeugseitenwänden angeordnet.

## Patentansprüche

1. Kassettengehäuse mit einem längserstreckten Schalen- oder Hohlprofil für die Aufnahme von wenigstens einer Wickelwelle, auf der jeweils ein flexibles Flächengebilde auf- und abwickelbar gehalten ist, **dadurch gekennzeichnet, dass** das Schalen- oder Hohlprofil (3) für die Aufnahme der wenigstens einen Wickelwelle nichttragend gestaltet ist, und dass ein lasttragendes Längsprofil (1) vorgesehen ist, das sich zumindest weitgehend über die Länge des Kassettengehäuses erstreckt, und an dem das Schalen- oder Hohlprofil (3) befestigt ist.

2. Kassettengehäuse nach Anspruch 1, **dadurch gekennzeichnet, dass** das lasttragende Längsprofil (1) mit einer Lochstruktur (4) versehen ist.

3. Kassettengehäuse nach Anspruch 1 oder 2, **dadurch gekennzeichnet, dass** das Längsprofil (1) einen L-förmigen Querschnitt aufweist.

4. Kassettengehäuse nach Anspruch 1, **dadurch gekennzeichnet, dass** das Längsprofil (1) an gegenüberliegenden Stirnenden mit Lagerböcken (8) zur Lagerung von wenigstens einer Wickelwelle versehen ist.

5. Kassettengehäuse nach Anspruch 4, **dadurch gekennzeichnet, dass** die Lagerböcke einstückig an dem Längsprofil (1) angeformte Tragwinkel (8) umfassen.

6. Kassettengehäuse nach Anspruch 1, **dadurch gekennzeichnet, dass** das Längsprofil (1) als einteilige Metallblechkonstruktion ausgeführt ist.

7. Kassettengehäuse nach Anspruch 1, **dadurch gekennzeichnet, dass** zwei becherartige Seitenteile (2) vorgesehen sind, die das Längsprofil (1) und das Profil (3) teilweise axial überdecken und sowohl mit dem Längsprofil (1) als auch mit dem Profil (3) verbunden sind.

8. Kassettengehäuse nach einem der vorhergehenden Ansprüche, **dadurch gekennzeichnet, dass** die Seitenteile (2) und/oder das Profil (3) aus einem Leichtbauwerkstoff, insbesondere aus Kunststoff oder einem Verbundwerkstoff, hergestellt sind.

9. Kassettengehäuse nach Anspruch 7, **dadurch gekennzeichnet, dass** die Seitenteile (2) Steckprofilierungen (18) zum axialen Aufstecken der Seitenteile (2) auf das Profil (3) und das Längsprofil (1) aufweisen.

10. Kassettengehäuse nach Anspruch 1, **dadurch gekennzeichnet, dass** das Längsprofil (1) einen profilierten Längskantenabschnitt (10) aufweist, der über seine Länge flächig mit einem Profilaufnahmeabschnitt (15) des Profiles verbunden ist.

## Claims

1. Cassette housing having a longitudinally extended shell-type or hollow profile for accommodating at least one winding shaft on which a respective flexible sheet-like structure is held in a manner such that it can be wound up and unwound, **characterised in that** the shell-type or hollow profile (3) for accommodating the at least one winding shaft is of a non-load-bearing form, and a load-bearing longitudinal profile (1) is provided which extends at least substantially over the length of the cassette housing and to which the shell-type or hollow profile (3) is fastened.

2. Cassette housing according to claim 1, **characterised in that** the load-bearing longitudinal profile (1) is provided with an aperture structure (4).

3. Cassette housing according to claim 1 or 2, **characterised in that** the longitudinal profile (1) has an L-shaped cross-section.

4. Cassette housing according to claim 1, **characterised in that** the longitudinal profile (1) is provided at opposite ends with bearing brackets (8) for supporting at least one winding shaft.

5. Cassette housing according to claim 4, **characterised in that** the bearing brackets comprise angled supports (8) integrally formed on the longitudinal profile (1).

6. Cassette housing according to claim 1, **characterised in that** the longitudinal profile (1) is in the form of a one-piece sheet metal construction.

7. Cassette housing according to claim 1, **characterised in that** two cup-like side parts (2) are provided which partially overlap the longitudinal profile (1) and the profile (3) axially and which are connected both to the longitudinal profile (1) and to the profile (3).

8. Cassette housing according to any one of the preceding claims, **characterised in that** the side parts (2) and/or the profile (3) are produced from a lightweight construction material, especially from plastics material or a composite material.

9. Cassette housing according to claim 7, **characterised in that** the side parts (2) have profiled plug-in structures (18) for the axial plugging of the side parts (2) onto the profile (3) and the longitudinal profile (1).

10. Cassette housing according to claim 1, **characterised in that** the longitudinal profile (1) has a profiled longitudinal edge portion (10) which is connected over its length in a planar manner to a profile-receiving portion (15) of the profile.

## Revendications

1. Boîtier de cassette comportant un profil creux ou de cuvette longitudinal pour loger au moins un arbre d'enroulement sur lequel respectivement un produit de surface flexible pouvant être enroulé et déroulé est maintenu, **caractérisé en ce que** le profil creux ou de cuvette (3) est formé non porteur pour loger au moins un arbre d'enroulement, et **en ce qu'**on prévoit un profil longitudinal porteur de charge (1) qui s'étend au moins largement sur la longueur du boîtier de cassette, et sur lequel le profil creux ou de cuvette (3) est fixé.

2. Boîtier de cassette selon la revendication 1, **caractérisé en ce que** le profil longitudinal porteur de charge (1) est muni d'une structure perforée (4).

3. Boîtier de cassette selon la revendication 1 ou 2, **caractérisé en ce que** le profil longitudinal (1) présente une coupe transversale en forme de L.

4. Boîtier de cassette selon la revendication 1, **caractérisé en ce que** le profil longitudinal (1) est muni de supports de palier (8) permettant de loger au moins un arbre d'enroulement à des extrémités frontales opposées.

5. Boîtier de cassette selon la revendication 4, **caractérisé en ce que** les supports de palier comprennent des angles de support (8) moulés à un seul étage sur le profil longitudinal (1).

6. Boîtier de cassette selon la revendication 1, **caractérisé en ce que** le profil longitudinal (1) est réalisé comme une construction de tôle métallique d'une pièce.

7. Boîtier de cassette selon la revendication 1, **caractérisé en ce qu'**on prévoit deux parties latérales du type coupe (2) qui recouvrent en partie axialement le profil longitudinal (1) et le profil (3) et sont reliées aussi bien au profil longitudinal (1) qu'au profil (3).

8. Boîtier de cassette selon l'une quelconque des revendications précédentes, **caractérisé en ce que** les parties latérales (2) et/ou le profil (3) sont fabriqué(e)(s) avec un matériau de construction légère, notamment une matière plastique ou un matériau composite.

9. Boîtier de cassette selon la revendication 7, **caractérisé en ce que** les parties latérales (2) présentent des profilages de couplage (18) permettant de placer axialement les parties latérales (2) sur le profil (3) et le profil longitudinal (1).

10. Boîtier de cassette selon la revendication 1, **caractérisé en ce que** le profil longitudinal (1) présente une section d'arête longitudinale profilée (10) qui est reliée sur sa longueur en nappe à une section de logement de profil (15) du profil.
